# EUROPEAN PATENT APPLICATION

(11) **EP 4 570 391 A1**
(43) Date of publication of application: **18.06.2025**
(21) Application number: 23216852.6
(22) Date of filing: 14.12.2023
(51) Int. Cl.: B05C 5/02

(54) **SYSTEM FOR MANUFACTURING AN ELECTRODE**

(71) Applicant: CUSTOMCELLS Holding GmbH, 25524 Itzehoe (DE)
(72) Inventor: Paulus, Alexander, Itzehoe (DE)
(74) Representative: LKGLOBAL Lorenz & Kopf Patentanwalt Attorney at Law PartG mbB

(57) **Abstract**

The invention relates to a system (100) for manufacturing an electrode, the system (100) comprising a slurry reservoir (110) containing slurry (150), the slurry (150) comprising an electrode coating material and other materials, such as a binder, a solvent, an additive and/or a conductive agent, and a die (120) configured to receive slurry (150) from the slurry reservoir (110) and apply the slurry (160) onto a substrate foil (140), wherein the die (120) comprises deflector elements (130) configured to swirl the slurry (160) leaving the die (120).

## Description

### FIELD OF THE DISCLOSURE

The present disclosure relates to a system for manufacturing an electrode, in particular for an energy storage device.

### BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes as a part of lithium-ion batteries and lithium metal batteries. Battery electrodes are typically conductive materials that may serve as a positive or negative terminal in a battery.

In the context of electrode production, it has been established to coat a substrate film with an active material. The first step of coating usually involves mixing active materials and different components resulting in a coating mass known as slurry. Besides the active materials, the slurry may comprise a conductive additive (e.g. carbon black or carbon nanotubes), other additives, a binder (e.g. PVDF), and a solvent. The binder may ensure a cohesive electrode structure and the slurry's adhesion to the substrate film. The conductive additives' and the additives' task may be to increase the slurry's conductivity. The solvent may facilitate the even dispersion of active materials, conductive additives, binder, and other additives, ensuring a homogeneous slurry.

The mixing process of the slurry usually comprises a step of dry mixing and a subsequent step of wet mixing. Dry mixing, using low or high energy, aim to thoroughly cover active materials with carbon black. Subsequently, wet mixing with solvent forms the slurry, initially agglomerated but may be made homogeneous through thorough stirring. Diverse mixing systems, techniques, temperatures, and stringent requirements may ensure quality. The slurry may meet specific parameters for homogeneity and viscosity for a safe coating process, considering changes over time that require rapid processing.

In a further step, the substrate film may be coated with the paste-like or almost liquid slurry using an application tool (e.g. slot-die, doctor blade, anilox roller). After coating, the substrate film may pass through a drying channel. The solvent is removed from the slurry by applying heat in the drying channel.

The demand for lithium-ion batteries, especially for electric vehicles, requires higher energy capacities, cost efficiency and faster charging options. Increasing the electrode thickness is a viable strategy to improve the energy capacity of cells while reducing costs. This beneficial result comes from increasing the proportion of active material relative to inactive material within the cell. However, a higher load often results in less (i.e. slower) movement of the lithium-ions (Li-ions) across thicker electrodes due to the longer ways (i.e. increased electrode thickness). Less ion movement leads to significant fluctuations in lithium concentration from the separator to the current collector, which can limit the usable capacity of the electrodes and promote irreversible lithium plating.

Enhancing ion movement within electrodes, in particular within the active material, has been achieved through the development of pore networks, notably reducing electrode tortuosity and thereby improving both energy density and rate performance. Researchers have explored diverse techniques to engineer electrode structures featuring voids or larger pores customized to enhance electrolyte penetration and Li-ion transport. These methods encompass magnetic particle alignment, co-extrusion, controlled mud-cracking, freeze casting, and the inclusion of pore formers. Notably, the use of short-pulsed lasers has emerged to create micropores or channels within various Li-ion battery electrodes. These laser-patterned microstructures establish pathways for Li-ion movement throughout the electrode, curbing electrolyte concentration discrepancies and lowering the electrochemical overpotentials that can lead to lithium plating.

However, these methods have proven to be disadvantageous in many respects.

Techniques involving magnetic particle alignment have shown to generate impurities and could potentially accelerate material aging, as detailed in the following literature:
Billaud, J., Bouville, F., Magrini, T., Villevieille, C., & Studart, A. R. (2016). Magnetically aligned graphite electrodes for high-rate performance Li-ion batteries. Nature Energy, 1(8), 1-6.
   And
Zhang, X., Julien, C. M., Mauger, A., & Gendron, F. (2011). Magnetic analysis of lamellar oxides for Li-ions batteries. Solid State Ionics, 188(1), 148-155.

US10675819B2 describes a method for the production of porous particles using magnetic fields. The method comprises exposing a precursor composition of a porous article to a magnetic field which causes longitudinal axes of elongated regions of emulsion droplets within a fluid of the precursor to become substantially aligned with each other.

However, in addition to the drawbacks of impurities and accelerated material aging, this method might result in a more complex electrode manufacturing process, accompanied by increased costs.

### SUMMARY OF THE DISCLOSURE

Currently, it remains desirable to overcome the aforementioned problems and in particular to provide a system for manufacturing an electrode with an increased energy capacity, wherein manufacturing does not lead to impurities.

Therefore, the present disclosure relates to a system for manufacturing an electrode. The system comprises a slurry reservoir containing slurry, the slurry comprising an electrode coating material and other materials, such as a binder (or several binders) a solvent an additive and/or a conductive agent (or several conductive agents). The system also comprises a die configured to receive slurry from the slurry reservoir and applying the slurry onto a substrate foil. Furthermore, the die comprises deflector elements configured to swirl the slurry leaving the die.

By providing such a system, the limitations of conventional techniques (as e.g. described above) may be overcome by minimizing waste and impurities in electrodes. The system may allow for the design of swirling motions or vortices that enable targeted segregation of the slurry, creating cavities or ion channels emerging from carbon-rich domains. Moreover, the system may have the potential to eliminate the need of any other process steps to produce cavities or pores in the electrodes. The disclosed system may potentially be faster than conventional systems requiring additional steps like a laser treatment, which may result in a reduction of energy and material demand.

The slurry may refer to a thick, semi-liquid mixture typically composed of solid particles suspended in a liquid. The slurry may be a non-compressible suspension. The slurry reservoir may refer to a containment or storage area designed to hold the slurry. The slurry reservoir may be engineered to handle the specific properties of the slurry, including their density, viscosity, and flow characteristics, ensuring proper storage and controlled dispensing when needed for operations. The slurry reservoir may comprise a mixing unit configured to mix electrode coating material, electrical conductive agents (e.g. carbon black or carbon nanotubes), binding agents (e.g. PVDF), additives, and/or solvents to form a slurry. After the slurry has been applied to the substrate foil, the slurry may be dried to form a coating layer on the substrate foil.

The combination of the substrate foil and the applied and dried slurry layer may be termed the coated electrode or, more broadly, referred to simply as the electrode.

The electrode coating material and/or the coating layer may comprise a metal or a mixture of metals. The metals, for example, may be selected from lithium, sodium, magnesium, aluminum, potassium and/or calcium. The thickness of the coating layer may be greater than or equal to 20 µm to less than or equal to 200 µm, optionally less than or equal to 120 µm, and in certain variations, optionally less than or equal to 60 µm. The coated electrode may have an electrode thickness of 1 µm to 500 µm, more preferably up to 200 µm.

The coated electrode, in particular its coating layer, i.e. the electrode coating material, may serve as an active material for the battery. During the operation of the battery, the active layer may be the material that may undergo a reversible electrochemical reaction during the charge and discharge process. In other words, the coated electrode or active material may be the substance that may participate in the electrochemical reactions producing the flow of electrons within the battery.

The active material, for example, for a negative battery electrode foil (i.e, anode), may comprise silicon, silicon oxides, carbon material, combinations thereof, and composites thereof. For example, the active material may comprise a silicon suboxide-carbon (SiOx/C, 1 ≤ x ≤ 2) composite. Silicon suboxide-carbon (SiOx/C, 1 ≤ x ≤ 2) composite is just one example of an active material. The examples of the active material of the positive battery electrode foil (i.e., cathode) in, for example, Li-ion batteries, include lithium cobalt oxide, lithium manganese oxides, lithium iron phosphate, lithium manganese iron phosphates, lithium nickel manganese cobalt oxide, lithium titanium oxide and lithium cobalt aluminum oxide. The active material of the battery electrode foil may be chosen to guarantee a good electrical conductivity, high thermal stability, and low resistance.

The substrate foil may be a sheet, base or underlying material onto which the electrode coating material or layer of another material may be applied. In the case of the coated electrode, the substrate foil may refer to the core or base material of the electrode onto which a specific electrode coating material may be applied to achieve certain properties or functions, such as enhanced conductivity, corrosion resistance, or catalytic activity. The electrode coating layer may be an additional layer that, for example, may modify the substrate foil's surface properties or provide specific characteristics to the electrode for its intended application.

The substrate or substrate foil may serve as a positive current collector or a negative current collector. In case the substrate foil serves as a positive current collector (i.e. for the cathode), the substrate foil may be an aluminum foil, typically 10 to 20 µm thick. Aluminum may have a high conductivity and it may be rather stable even at the high potential of the positive electrode. In case the substrate foil serves as a negative current collector (i.e. for the anode), the substrate may be a copper foil, typically 4 to 18 µm thick. Aluminum would be lighter and cheaper but it may not be used at the low potential of the negative electrode due to parasitic formation of a lithium/aluminum alloy.

The substrate foil may comprise a conductive material. The conductive material may comprise, for example, copper, aluminum, nickel-coated copper foil, aluminum-coated copper foil, stainless steel foil, and/or copper-zinc alloy foil. The substrate may be a base foil and/or a mesh, such as a metal mesh. The substrate foil may be based on fiberglass with a metallic coating.

The die may typically refer to a specialized tool or device used in manufacturing processes, especially for the application of slurry. The die may comprise or may be a nozzle. Accordingly, the die may comprise a narrow, elongated opening, through which materials, such as slurry, are extruded or forced through to create a specific shape or form. The opening of the die may also be referred to as a nozzle. For the manufacturing of electrodes, dies may be commonly used in the production of films, sheets, fibers, or other products where precise control over the width and thickness of the output may be required.

The deflector elements may be positioned within the die. The deflector elements may be designed in a way that when the slurry exits the die and comes into contact with the deflector elements, the deflector elements may cause the slurry to move or flow in a swirling motion. Instead of simply flowing straight out, the deflector elements may alter the direction and movement of the slurry, potentially creating a swirling or rotational flow pattern as it leaves the die. This swirling action may be configured to achieve specific effects in the final product, such as enhancing mixing, promoting uneven and/or locally concentrated distribution of the electrode coating material, or influencing the material's properties. In other words, the deflector elements may be integrated into the die structure, placed in such a way that the slurry flow interacts with them.

When the swirled slurry reaches the substrate foil, the swirling motion may influence how the electrode coating material is distributed across the surface of the substrate foil. The uneven or swirling flow pattern of the slurry might cause variations in how the electrode coating material is deposited onto the substrate foil. This irregular distribution may possibly lead to an uneven or non-uniform coating of the electrode across the substrate foil's surface. In simpler terms, the swirling motion of the slurry might result in areas where the coating is thicker or thinner than desired, creating an unevenness or lack of uniformity in the layer of active electrode material on the substrate foil. The swirling motion of the slurry may also create areas with high concentration or dense areas of active material. The swirling motion of the slurry may be controlled as a function of the dense area, wherein the dense area may be in the center of the swirling motion.

The swirling motion may create cavities in the coating layer or coating of the electrode, in particular between the dense areas. In other words, the less densely coated areas may form voids or cavities within the electrode coating, particularly noticeable between sections where the coating is more densely applied. The cavities might improve the overall integrity and performance of the electrode by potentially affecting conductivity, active material distribution, and the electrode's electrochemical properties.

The cavities (also referred to as holes or channels) within the electrode coating may be designed to serve as ion transport pathways. The ion transport pathways or voids may be intended to facilitate better penetration of ions, especially in thicker electrodes. The ion transport pathways may enhance the movement of ions through the electrodes, which may be more challenging in thicker electrodes due to increased diffusion distances. By introducing ion transport pathways or voids during the manufacturing process, the goal may be to create more accessible and efficient routes for ions to move into and out of the electrode coating material, thereby possibly improving the overall performance and efficiency of the battery or electrochemical device. The ion transport pathways may strategically be designed to optimize ion diffusion, in particular the diffusion of lithium ions, and promote better electrochemical performance in thicker electrode structures.

The cavities or ion transport pathways may have a diameter of less than or equal to 200 µm, more preferably less than or equal to 100 µm and in certain variations, optionally less than or equal to 50 µm.

However, it has been found that an uneven and/or locally concentrated distribution of the electrode coating material can generally allow an enhanced ion transport, and thus can increase the energy capacity of the electrode.

In one aspect, the slurry may flow laminar from the slurry reservoir to the die in a flow direction. Furthermore, the deflector elements may be inclined with respect to the flow direction according to one or several predefined deflection angles to deflect the slurry from the flow direction.

In other words, the deflection may lead to swirling the slurry leaving the die. The deflector elements may be positioned at specific angles concerning the direction of the slurry flow. A deflection angle or inclination angle may be an angle between the plane spanned by the at least one of the deflector elements and the flow direction. By adjusting the inclination or orientation of these deflector elements (i.e. deflection angle or inclination angle), the intention may be, for example, to redirect the flow of the slurry, causing it to deviate from its initial path and follow a different direction. Possibly, having varying inclinations in the deflector elements might be advantageous for inducing specific vortices or swirls.

In one aspect, the deflector elements may be configured to be adjustable by a deflection angle to deflect the slurry from the flow direction and/or wherein the deflector elements may be movable.

Being movable may mean that these deflector elements may not be fixed in place but instead may be adjusted, shifted, or repositioned within the die. This adjustability may provide flexibility in the manufacturing process, allowing for changes in the deflection angles or redirection of the slurry flow as needed. The mobility of these deflector elements may provide adaptability, allowing for swift adjustments to counter disruptive factors like slurry inconsistencies that may occur throughout the manufacturing process.

The deflector elements may be actively or passively movable. The deflector elements may be pivotally mounted or passively movable responding reactively to external forces without actively initiating movements themselves.

In one aspect, the die may have the shape of a slot-die (also referred to as a slit die). Furthermore, the die may have a housing with a slit shaped opening on one side configured to eject the slurry. The die may have a supply port on another side configured to receive slurry from the slurry reservoir. The deflector elements may be arranged in the housing.

The width direction of the opening may correspond to a width direction of the housing. The height direction of the opening may correspond to a height direction of the housing. The length direction of the housing may be perpendicular to the width direction and the height direction of the housing. The housing may have substantially the form of a flat cuboid, wherein one small side of cuboid is the slit formed opening. The two large main side may be in the main plane of the housing or the slot-die. These main sides may be provided by the inner main walls of the housing, to which (or at least to one of which) the deflector elements may be attached.

The slot-die may also be referred to as slot-die or nozzle. The die may comprise a variable opening configured to be passed by the slurry to be applied onto the substrate foil. The housing of the die may further comprise a funnel-shaped region adjacent to the supply port of the die, wherein the funnel-shaped region has a cross-sectional area that increases in the flow direction towards the opening.

In one aspect, the deflector elements may be attached to or protrude from an inner wall of the housing of the die. Furthermore, at least one inner wall of the housing of the die may have a structured surface which may constitute the deflector elements.

The inner (main) wall may be perpendicular to the opening and may be in the plane of the slot-die. This plane may be defined by the length and width direction of the housing.

Attaching or allowing the deflector elements to protrude from the inner wall of the die housing may offer a cost-effective and straightforward design approach. By affixing the deflector elements directly onto the inner surface or allowing them to extend from it, the manufacturing process may be simplified and made more economical.

In one aspect, the deflector elements may have a height which may be smaller than a height of the housing and/or a height of the opening. Optionally, a proportion of the height of the deflector elements to the height of the housing be to or below 0.7, 0.5, or 0.1. Optionally, a proportion of the height of the deflector elements to the height of the opening may be to or below 0.7, 0.5, or 0.1. Optionally, the height of the deflector elements may be equal to or below 300 µm, 150 µm, or 30 µm
In one aspect, the deflector elements may have the shape of a plurality of plates and/or of a grid.

In one aspect, the deflector elements may be arranged in at least one row or in a matrix form being parallel to the opening. Furthermore, the deflector elements may be arranged in at least one spiral arrangement that extends in the direction of the opening.

Furthermore, the deflector elements in the row or matrix form may be arranged in a sawtooth pattern. The sawtooth pattern may present alternating peaks and valleys along the path of the material flow. The sawtooth pattern or matrix form may disrupt the smoothness of the flow, inducing controlled turbulence or redirection of the material passing through the die. By employing the sawtooth pattern or matrix form, the deflector elements may more effectively manipulate the flow, possibly enhancing mixing or promoting more uniform distribution of the material.

In one aspect, the deflector elements may be configured to form multiple turbulent jets or vortexes in the slurry leaving the die.

In one aspect, the turbulent jets or vortexes may have such dimensions that the electrode coating material remains substantially in the center of the jets and the other materials substantially around the center.

The distribution of material may be possible due to the different size of the materials. Since the electrode coating material may have rather large and heavy particles, the particles may tend to remain in the center. The system of the present disclosure may thus utilize the turbulent jets or vortexes caused by the deflector elements in such a way that the heavier electrode coating material (i.e. heavier electrode coating particles) tends to remain in the center of the turbulent jets or vortexes. As a result, the electrode coating material can form columns or clusters on the substrate film, between which the cavities are formed, where the other materials of the slurry are concentrated, such as a binder, a solvent, an additive and/or a conductive agent. Consequently, cavities providing relatively thin paths can be created in the coating layer that do not mandatorily appear as actual holes, but rather as areas comprising e.g. a carbon black binder matrix with a less or no electrode coating material. The cavities may have e.g. provide 50 µm thick paths, possibly even 5-10 µm thick paths.

In one aspect, the deflector elements may be configured such that the distribution of the electrode coating material may have an uneven and/or locally concentrated distribution on the substrate foil.

In one aspect, the system may be configured such that the at least portion of the slurry leaving the die exhibits turbulent flow having a Reynolds number (Re) of more than 3500.

In one aspect, the system may comprise a conveyor device for conveying a substrate foil in a conveying direction. Furthermore, the die may be configured to apply the slurry onto the conveyed substrate foil.

The relatively large width of the slit shaped opening may be predetermined as a function of a width of the electrode, in particular by considering one or several uncoated areas for contact tabs of the electrode. The width direction of the electrode tape may be perpendicular to the conveying direction, i.e. the length direction of the electrode tape.

The present disclosure also relates to a computer-implemented method of simulating a coating process to manufacture a system of coating a substrate foil to from an electrode. The computer-implemented method may comprise receiving an input dataset comprising a cavity index associated to cavities in the coating, and a machine-learning model comprising a set of model parameters. Furthermore, the method may comprise optimizing the model parameters by iteratively simulating the coating process to achieve the cavity index changing at least one of the following model parameters:
a shape and/or a dimension of a die, a shape and/or a dimension of a deflector element, a number of deflector elements, a position of a deflector element,
the surface of the die, the surface of the deflector element. The computer-implemented method may comprise producing an output dataset comprising optimized model parameters to manufacture a system of coating a substrate foil to from an electrode.

The set of model parameters may comprise, for example, a shape and a dimension of a slurry reservoir, a shape of a die, flow parameters of a slurry, and a shape of a deflector element.

The present disclosure may also relate to a machine-learning model for simulating a coating process to manufacture a system of coating a substrate foil to from an electrode, in particular for use in the method as described above, comprising: a model representing input and output parameters of the system according to any of the preceding claims, a model representing input and output parameters of the substrate foil during the manufacturing process, and a model representing input and output parameters of a slurry to be applied onto the substrate foil during the manufacturing process.

The present disclosure also relates to a method of coating a substrate foil to form an electrode. The method may comprise providing a substrate foil, and ejecting a slurry onto the substrate foil, wherein the slurry is swirled during ejection.

In other words, the slurry may have a high degree of turbulence (Re > 3500).

The slurry may be applied on both sides of the substrate foil. This approach may refer to double-sided (or two-sided) coating. Double-sided coating may comprise the simultaneous application of an electrode coating material from both the top and bottom of a substrate foil. Alternatively, it may involve a sequential process where the substrate foil may initially be coated from the top side, followed by a step where the substrate foil may be flipped, and the reverse side is subsequently coated from the top.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a system 100 for manufacturing an electrode comprising a die 120 in a plan view according to examples of the present disclosure.
Fig. 2 schematically shows the concept of swirling a slurry 150 with the deflector elements 130 of the system 100 according to examples of the present disclosure.
Fig. 3 schematically shows one deflector element 135 of the set of deflector elements 130 configured to be adjustable by a deflection angle 300 to deflect the slurry 150 from the flow direction 200 according to examples of the present disclosure.
Fig. 4 schematically shows the deflector elements 130 are configured to form multiple turbulent jets 600a, 600b, 600c, 600d, and 600e or vortexes in the slurry 160 leaving the die 120.
Fig. 5a schematically shows the system 100 with deflector elements 130 having a height 720 which is smaller than a height 710 of the opening 700 of the system 100 according to examples of the present disclosure.
Fig. 5b schematically shows the system 100 with deflector elements 130 having a height 720 which is smaller than a height 710 of the opening 700 of the system 100 in a modified example in view of fig. 5a.
Fig. 6 schematically shows the system 100 with deflector elements 130 having a height 720 which is equal a height 710 of the opening 700 of the system 100 according to examples of the present disclosure.
Fig. 7 schematically shows the system 100 with deflector elements 130 the shape of a grid 900 according to examples of the present disclosure.
Fig. 8 schematically shows the system 100 comprising a die 120 and a conveyor device 1000 conveying a substrate foil 140 in a side view according to examples of the present disclosure.
Fig. 9 schematically shows the system 100 of Fig. 8 in a plan view according to examples of the present disclosure.
Fig. 10A shows a schematic drawing of a one-side coated electrode 400 according to examples of the present disclosure.
Fig. 10B shows a schematic drawing of a two-side coated electrode 400 according to examples of the present disclosure.
Fig. 11 shows a schematic drawing of a lithium-ion battery 500 during discharging with an anode 510 and a cathode 520 according to examples of the present disclosure.
Fig. 12A schematically shows the formation of particles 1200 in the coating layer 405 applied to the substrate foil 140 without swirling the slurry 160.
Fig. 12B schematically shows the formation of particles 1200 in the coating layer 405 applied to the substrate foil 140 after swirling the slurry 160 with the system 100 according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

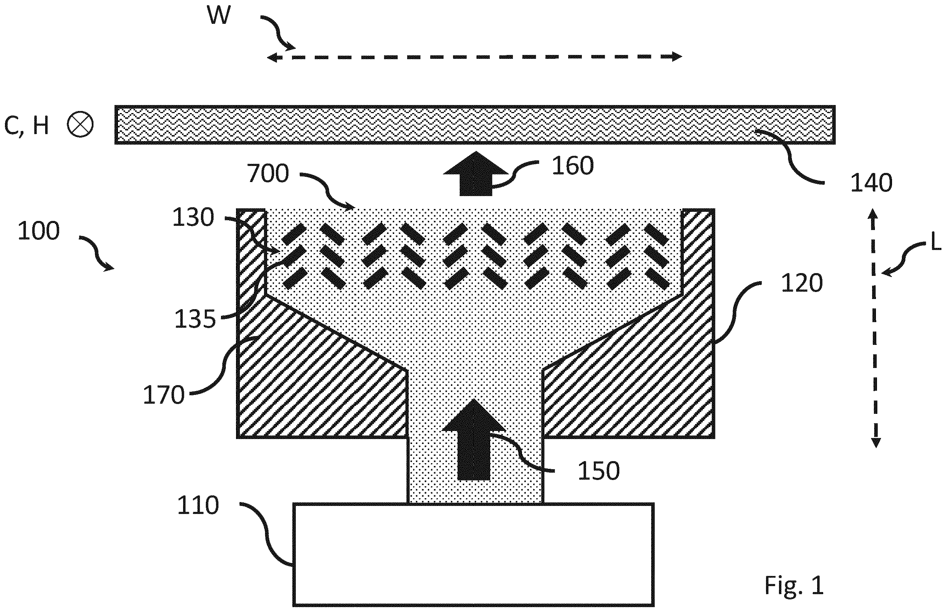

Fig. 1 shows a system 100 for manufacturing an electrode comprising a die 120 in a plan view according to examples of the present disclosure.

The system 100 comprises a slurry reservoir 110 containing slurry 150. The slurry 150 comprises an electrode coating material and other materials, such as a binder, a solvent, an additive and/or a conductive agent. The system further comprises a die 120 configured to receive slurry 150 from the slurry reservoir 110 and apply the slurry onto a substrate foil 140. The die 120 comprises deflector elements 130 configured to swirl the slurry 160 leaving the die 120. The die 120 has a housing 170 with an opening 700.

The die may have the shape of a slot-die. It is noted that the figures of the present disclosure are merely schematic and thus the dimensions of the slot-die are not shown in a elastic way but rather to illustrate the principles of the present disclosure.

The relatively large width W of the slit shaped opening 700 may be predetermined as a function of a width of the substrate foil 140, in particular by considering one or several uncoated areas for contact tabs of the electrode. The width direction of the substrate foil may be perpendicular to the conveying direction C, i.e. the length direction of a coated electrode tape (i.e. the substrate foil after coating). The conveying direction C may correspond to a height direction H of the housing. The length direction L of the housing may be perpendicular to the width direction W and the height direction H of the housing. Each deflector element 135 of the deflector elements 130 may be arranged in a certain pattern to swirl the slurry 160 leaving the die 120.

When the swirled slurry 160 reaches the substrate foil 140, the swirling motion may influence how the electrode coating material is distributed across the surface of the substrate foil 140. The uneven or swirling flow pattern of the slurry 140 might cause variations in how the electrode coating material is deposited onto the substrate foil 140. This irregular distribution may possibly lead to an uneven or non-uniform coating of the electrode across the surface of substrate foil 140.

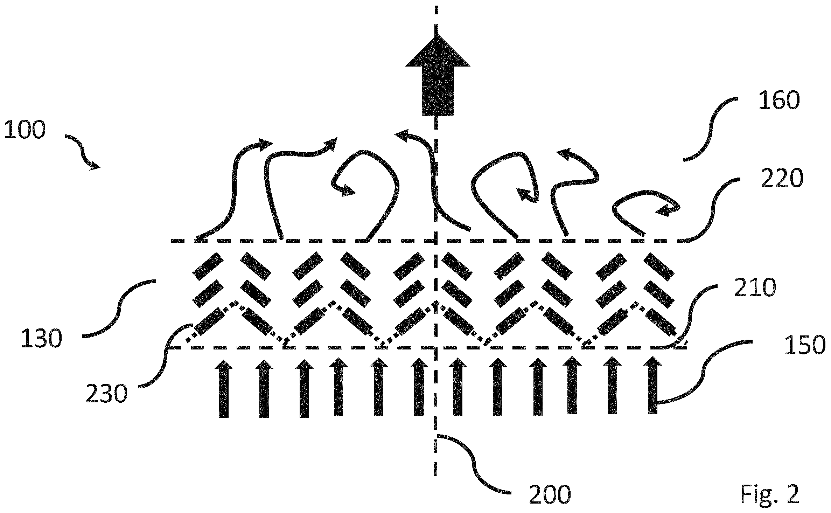

Fig. 2 schematically shows the concept of swirling a slurry 150 with the deflector elements 130 of the system 100 according to examples of the present disclosure.

The deflector elements 230 of the die 120 may be arranged in three rows, wherein each row is in a sawtooth pattern 230.

The slurry 150 may flow laminar along from the slurry reservoir to the die 120 in a flow direction 200. When passing a first line 210, the slurry 150 may be affected by the deflector elements 130. After passing a second line 220, the slurry 150 may pass over to a turbulent slurry 160 leaving the die 120.

As the slurry 150 may travel from the slurry reservoir 110 to the die 120 along a flow direction 200, while it typically may maintain a laminar flow pattern. Upon encountering the deflector elements 130 at the first line 210, the slurry 150 undergoes an interaction with the deflector elements 130. Following this interaction with the deflector elements 130 and as it may reach the second line 220, a transformation may occur, causing the slurry 150 to transition into a turbulent state, resulting in the emergence of turbulent slurry 160 as it leaves the die 120. The deflector elements may be in particular configured to form multiple turbulent jets or vortexes in the slurry leaving the die.

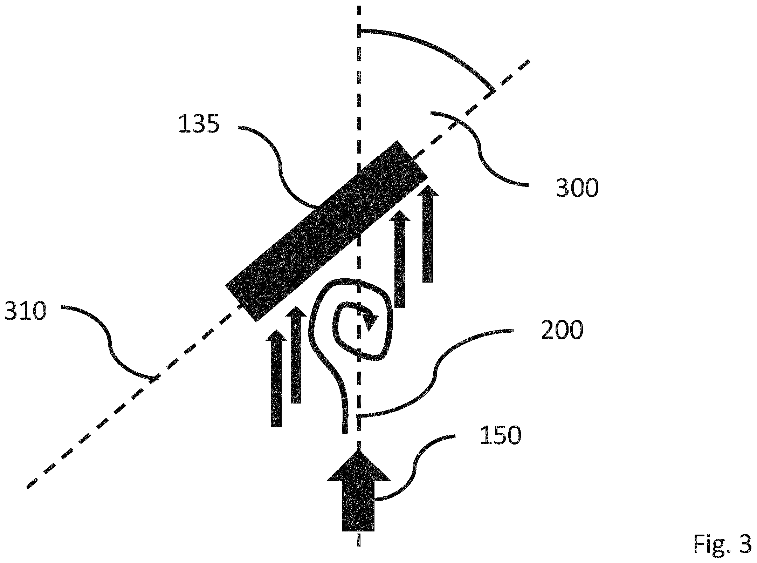

Fig. 3 schematically shows one deflector element 135 of the set of deflector elements 130 configured to be adjustable by a deflection angle 300 to deflect the slurry 150 from the flow direction 200 according to examples of the present disclosure.

The deflector elements 135 may be inclined with respect to the flow direction 200 according to a predefined deflection angle 300 to deflect the slurry 150 from the flow direction 200. A deflection angle 300 may be an angle between the plane 310 spanned by the deflector element 135 and the flow direction 200. Since the slurry may need to pass several layers (or row) of deflector elements (cf. e.g. fig. 2), the slurry may reach complex forms of swirls comprising multiple turbulent jets or vortexes in the size of a few micrometers, e.g. 100 to 500 µm, or possibly even 5 to 20 µm. In this context, it is noted that each of these turbulent jets or vortexes may contain the particle-rich domain (i.e. heavier particles of the electrode coating material) at the core and the particle-poor domain at the edge. The total diameter may therefore be in the range of the sum of these two, e.g. at 100 to 500 µm, even though the cavities resulting between the core areas may be smaller than this total diameter.

A deflector element may have the form of a plated, in particular a slanted (i.e. inclined) plate with respect to the flow direction 200. It may possibly also have a concave design, wherein the concave form may optionally face the flow direction, i.e. may face the flowing slurry and thus deflect the flow direction (i.e. swirl the slurry).

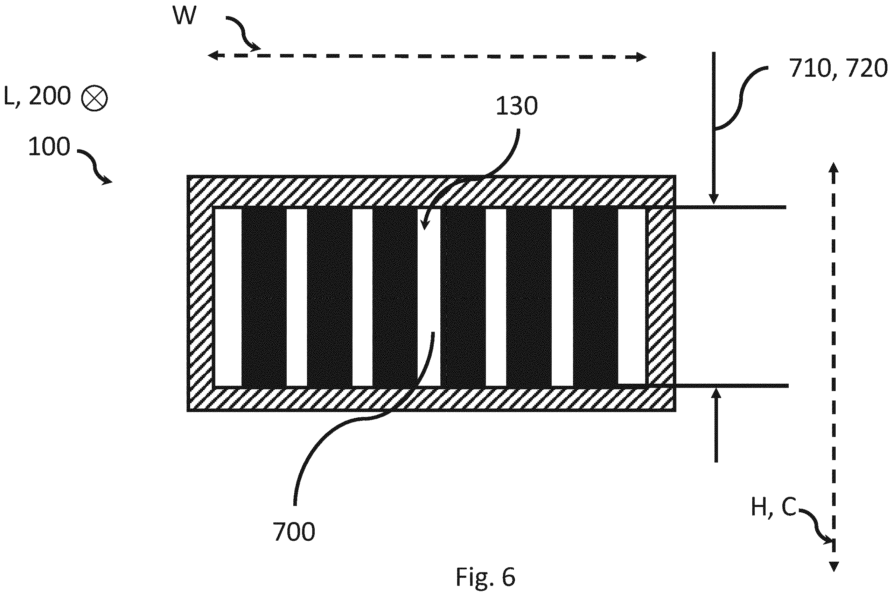

The resulting turbulent jets or vortexes may have any orientation, in order to achieve an uneven and/or locally concentrated distribution of the electrode coating material on the substrate foil (and possibly thus cavities within the coating layer). For example, the central axis of a vortex (i.e. the main rotation axis) may be substantially parallel to the flow direction 200 or perpendicular thereto. In particular, the plate-formed deflector elements, as e.g. shown in fig. 6 can lead to vortexes with a central axis substantially in parallel to the deflector elements.

It is further noted that the resulting turbulent jets or vortexes may be a temporal phenomena, such that a particular vortex may only temporarily appear at particular position and orientation with respect to the die 120. For example particular vortexes may appear, change their position and/or orientation and then disappear again, wherein other vortexes appear. Accordingly, the structure of the coating layer may have resulting cavities at different positions along the substrate foil.

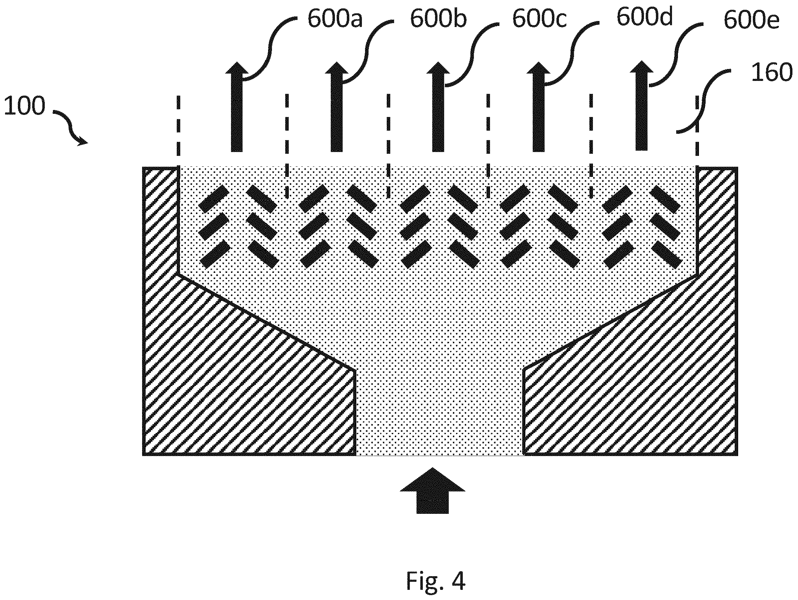

Fig. 4 schematically shows the deflector elements 130 are configured to form multiple turbulent jets 600a, 600b, 600c, 600d, and 600e or vortexes in the slurry 160 leaving the die 120.

The turbulent jets or vortexes 600a, 600b, 600c, 600d, and 600e may have such dimensions that the electrode coating material in the slurry 160 remains substantially in the center of the jets and the other materials substantially around the center.

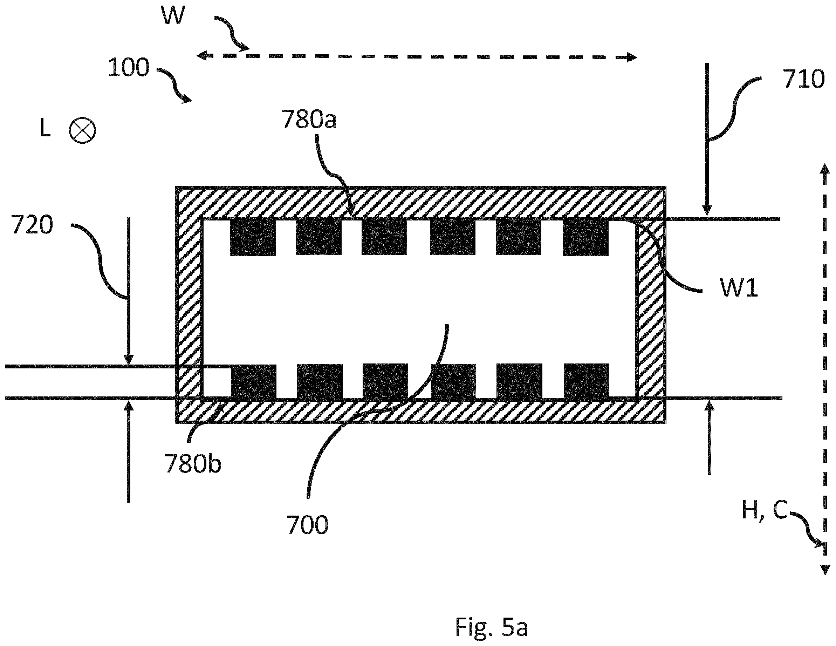

Fig. 5a schematically shows the system 100 with deflector elements 130 having a height 720 which is smaller than a height 710 of the opening 700 of the system 100 according to examples of the present disclosure. In other words, the deflector elements may be provided by structuring the surface of one more several (e.g. facing) inner walls of the housing of the die.

The height direction H may correspond to the conveying direction C of the conveyed substrate foil and may be perpendicular the width direction W. The deflector elements may be realized by a deflector elements may be attached to or protrude from two facing inner walls 780a, 780b of the housing of the die. Furthermore, at least one inner wall of the housing of the die may have a structured surface which may constitute the deflector elements

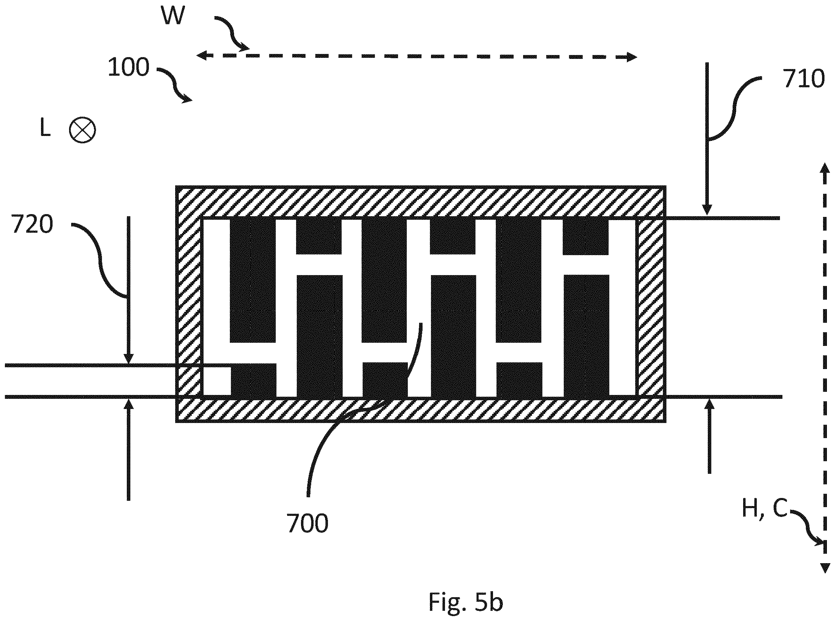

Fig. 5b schematically shows the system 100 with deflector elements 130 having a height 720 which is smaller than a height 710 of the opening 700 of the system 100 in a modified example in view of fig. 5a. The example of fig. 5b may thus principally correspond to that one of fig. 5a. However, the deflector elements on the facing inner walls may have alternated lengths. This configuration may be used to increase the vortices in the ejected slurry.

Fig. 6 schematically shows the system 100 with deflector elements 130 having a height 720 which is equal a height 710 of the opening 700 of the system 100 according to examples of the present disclosure. Fig. 6 may represent the most advantageous configuration or one of the most advantageous configurations, as it may lead to vortexes with a central axis which extends over the complete height of the opening.

The height 710 of the opening 700 of the system 100 may be between 300 µm to 700 µm.

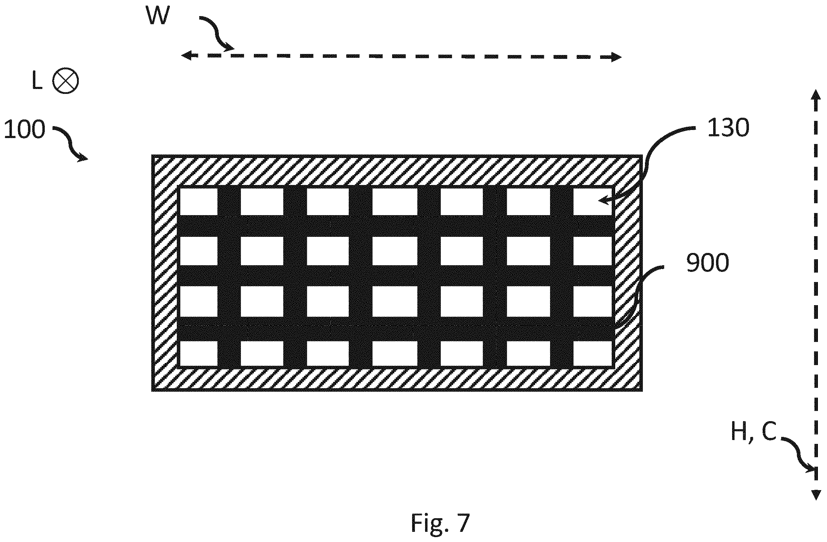

Fig. 7 schematically shows the system 100 with deflector elements 130 the shape of a grid 900 according to examples of the present disclosure.

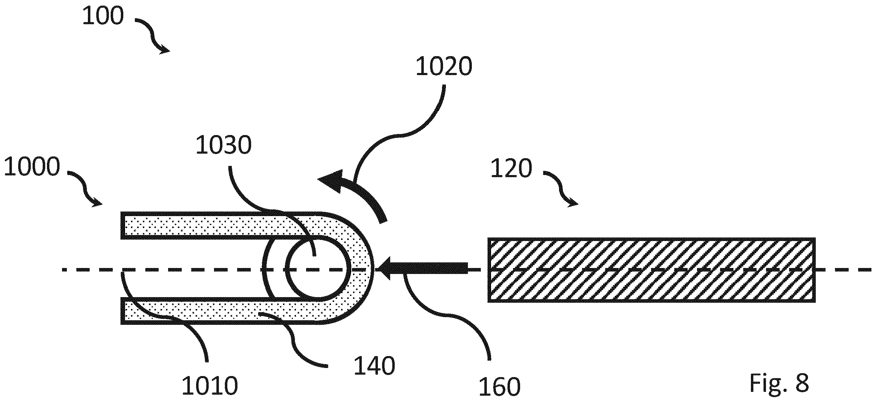

Fig. 8 schematically shows the system 100 comprising a die 120 and a conveyor device 1000 conveying a substrate foil 140 in a side view according to examples of the present disclosure.

The conveyor device 1000 may comprise a roller 1030. The roller 130 may be a deflection roller, e.g. deflection the substrate foil by 180°. The roller 1030 and the die 120 may be positioned within the same plane 1010. The conveyor device 1000 is configured to convey the substrate foil 140 in a conveying direction 1020. The die 120 is configured to apply the slurry 160 onto the conveyed substrate foil 140.

The slot die (i.e. the principal direction of the ejected slurry 160) and the center of the deflection roller 1030 may be are in line. The slot die may be directed onto the apex point of the deflected substrate foil, at which the film is in direct contact with the deflection roller.

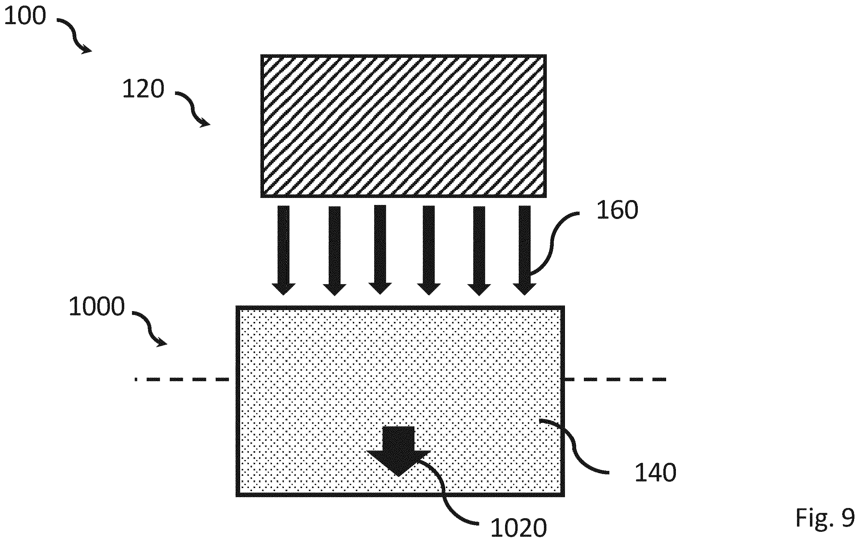

Fig. 9 schematically shows the system 100 of Fig. 8 in a plan view according to examples of the present disclosure.

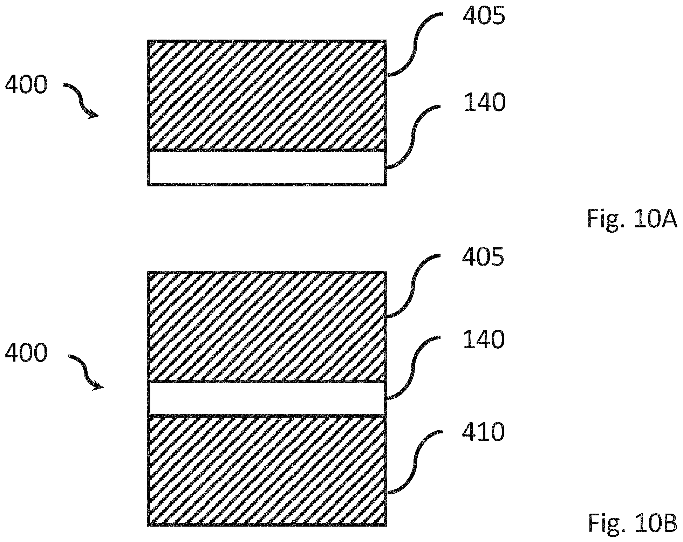

Fig. 10A shows a schematic drawing of a one-side coated electrode 400 according to examples of the present disclosure. The electrode 400 may be manufactured using the system 100 according to examples of the present disclosure.

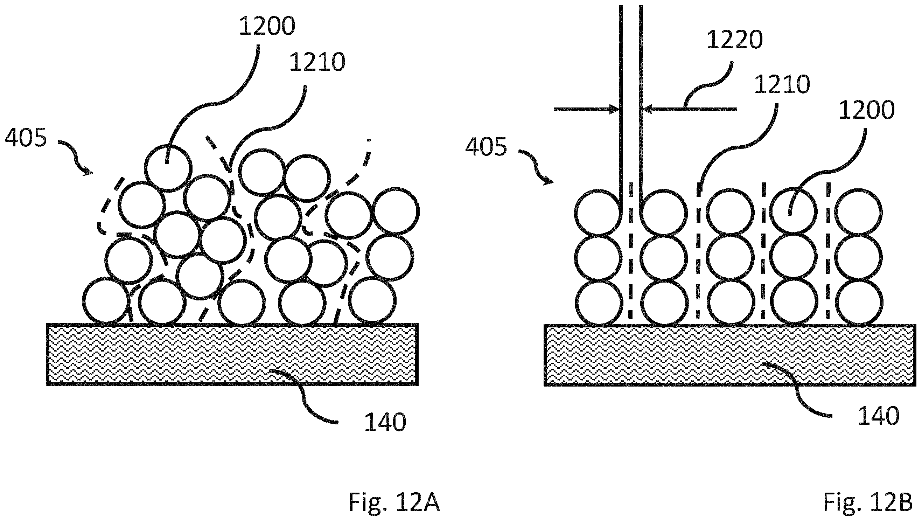

The coated electrode 400 comprises the substrate foil 160 and the coating layer 405. The one-side coated electrode 400 may serve as an anode in a lithium-ion. The substrate foil 160 may be a negative current collector. The substrate foil 160 may be a copper foil (typically 8 to 18 µm thick). As one example, the coating layer 405 may comprise graphite (95% by weight) as the active material, carbon black (1% by weight) as the conductive additive, carboxymethyl cellulose (2% by weight) as the binder, and styrene-butadiene-rubber (2% by weight) as an additive. The substrate foil 160 has a thickness of about 10 µm and the coating layer 405 has a thickness of about 60 µm in this example. The arrangement of the cavities within the coating layer, as caused by the system of the present disclosure, are schematically shown e.g. in fig. 12b.

Fig. 10B shows a schematic drawing of a two-side coated electrode 400 according to examples of the present disclosure.

The two-side coated electrode 400 comprises a substrate foil 160, a first coating layer 405, and a second coating layer 410. In other words, a coating layer 405, 410 may be positioned on both sides of the coated electrode 400. The preparation of the two-side coated electrode 400 may involve a sequential process where the substrate foil 160 is initially coated from the top side, followed by a step where the substrate foil 160 may be flipped, and the reverse side is subsequently coated from the top. Alternatively, the preparation of the two-side coated electrode 400 may involve the simultaneous coating from both the top and bottom of the substrate foil 160.

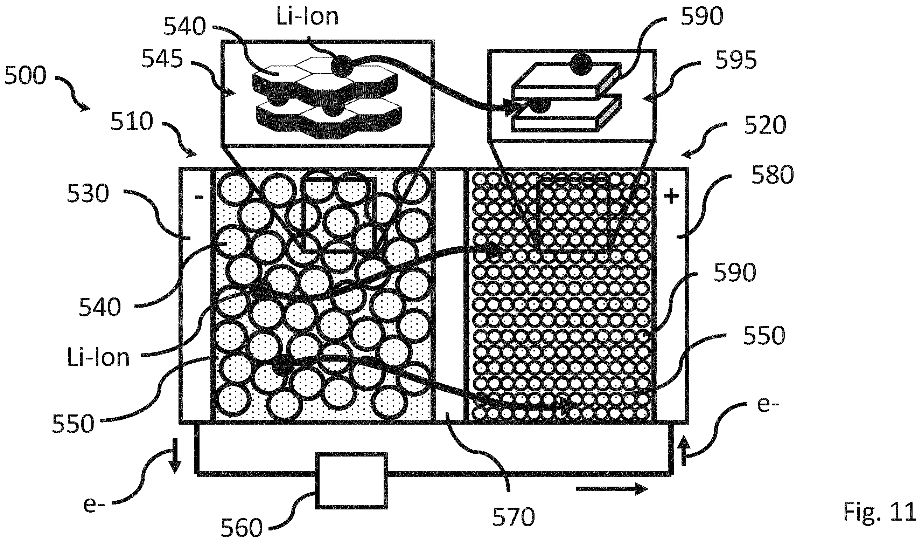

Fig. 11 shows a schematic drawing of a lithium-ion battery 500 during discharging with an anode 510 and a cathode 520 according to examples of the present disclosure. This example illustrates a basic scenario featuring two electrodes (anode 510 and cathode 520) to emphasize the roles of the components within the lithium-ion battery 500. However, it is widely acknowledged that multiple electrodes are typically stacked together to form a lithium-ion battery 500. Of course, a lithium-ion battery is only one possible use case of the coated electrodes of the present disclosure.

The anode 510 or cathode 520 may be a coated electrode according to any examples of the present disclosure. For example, the anode 510 or cathode 520 may be a one-side coated electrode 400 according to examples of the present disclosure.

The lithium-ion battery 500 may be rechargeable. In case of discharging the lithium-ion battery 500, the positive electrode is called "cathode" and the negative electrode is called "anode". This terminology is different during the charging process, where the positive electrode may work as anode and the negative electrode may work as cathode.

The anode 510 comprises a first substrate 530 and a first active material 540. The first the substrate 530 may be a copper foil, typically 8 to 18 µm thick. The cathode 520 comprises a second substrate 580 and a second active material 590. The second substrate 580 may be an aluminum foil, typically 15 to 20 µm thick. The lithium-ion battery 500 may further comprise a separator 570 that is positioned between the first active material 540 and the second active material 590. The separator 570 may be a porous membrane to electrically isolate the anode 510 and the cathode 520 from each other.

The lithium-ion battery 500 further usually comprises an ion-conducting electrolyte 550 (e.g. containing a dissociated lithium conducting salt). The ion-conducting electrolyte 550 may wet the separator 570, the first active material 540 and the second active material 590 to enable a flow of ions between the anode 510 and the cathode 520.

The lithium-ion battery 500 is connected to a load 560. Loads may be any device or component that consumes electrical energy, such as electric motors, heaters, computers, industrial machinery, light bulbs or electronic devices.

During discharging of the lithium-ion battery 500, the lithium ions (Li-Ion) may migrate from the first active material 540 of the anode 510 through the electrolyte 550 and the separator 570 to the second active material 590 of the cathode 520. Simultaneously, electrons (e-), serving as carriers of electricity, migrate from the first substrate 530 of the anode 510 through an external electrical connection (a cable), powering the load 560, and reaching the second substrate 580 of the cathode 520.

During charging, the process may be reversed: Lithium ions (Li-Ion) migrate from the second active material 590 through the electrolyte 550 and the separator 570 to the first active material 540. Simultaneously, electrons generated from an external power source move may enter the anode 510 and may provide energy to force the lithium ions back to their original location within the first active material 540.

Close-up 545 provides a schematic depiction, offering a detailed view of the process within the first active material 540. Meanwhile, close-up 595 similarly schematically illustrates the process occurring within the second active material 590 in greater detail.

A common first active material 540 of an anode 510 may be graphitic carbon, which may have a layered structure of carbon atoms in graphene layers shown in the close-up 545. During charging, lithium ions may be intercalated between the layers, and during discharging, lithium leaves the graphite. Graphite may be stable even without lithium and can be almost completely discharged. For complete discharging, the reaction at the negative electrode is:

*LiC₆* → *Li*⁺ + *e⁻* + 6*C*

For every mole (7g) of active lithium, six moles (72g) of carbon may act as hosts during charging.

A traditional second active material 590 of a cathode 520 is, for example, lithiated cobalt oxide (LiCoO2). The active material 590 may have a layered structure comprising cobalt, oxygen, and lithium ion layers shown in the close-up 595. During charging, lithium leaves the crystal structure (deintercalation) and returns during discharging (intercalation), but only about 50% of the lithium may be utilized. If more than half leaves, it might cause structural collapse, releasing oxygen and potentially leading to thermal runaway. For complete discharging, the reaction at the positive electrode is:

2*Li*_{0.5}*CoO*₂ + *Li*⁺ + *e*⁻ → 2*LiCoO*₂

To achieve complete discharging, two moles (189g) of Li0.5CoO2 may be required for every mole (7g) of active lithium.

Fig. 12A schematically shows the formation of particles 1200 of the active material, i.e. the electrode coating material, in the coating layer 405 applied to the substrate foil 140 without swirling the slurry 160.

When the slurry 160 is not subjected to swirling, the resulting coating layer 405 may exhibit high tortuosity. Tortuosity may refer to the degree of complexity or irregularity in the path or transport pathway 1210 through which ions (e.g. Li-ions) move within a porous material. In this context, the high tortuosity in the coating layer 405 indicates that the particles 1200 within the coating layer 405 are arranged in a complex manner, possibly leading to a less and/or longer ion transport pathways 1210 for passing through the coating layer 405. The high tortuosity might reduce the performance of the electrode.

Fig. 12B schematically shows the formation of particles 1200 in the coating layer 405 applied to the substrate foil 140 after swirling the slurry 160 with the system 100 according to examples of the present disclosure.

Due to the swirling action applied to the slurry 160 during the coating process, the resulting coating layer 405 may exhibit low tortuosity. Lower tortuosity may indicate that the particles 1200 within the coating layer 405 may organized in a more ordered or straightforward manner, potentially facilitating more direct ion transport pathways 1210 for ions passing through the coating layer 405. This decreased complexity in particle arrangement may enhance the performance of the electrode.

The system of the present disclosure may utilize the turbulent jets or vortexes caused by the deflector elements in such a way that the heavier electrode coating material 1200 (i.e. heavier electrode coating particles) tends to remain in the center of the turbulent jets or vortexes. As a result, the electrode coating material can form columns or clusters on the substrate film, between which the cavities 1210 are formed, where the other materials of the slurry are concentrated, such as a binder, a solvent, an additive and/or a conductive agent. Consequently, cavities providing relatively thin paths can be created in the coating layer that do not mandatorily appear as actual holes, but rather as areas comprising e.g. a carbon black binder matrix with a less or no electrode coating material. The cavities may provide paths, in particular ion transport paths in the electrode. The ion transport pathways 1210 or cavities may have a diameter of less than or equal to 200 µm, more preferably less than or equal to 100 µm and in certain variations, optionally less than or equal to 50 µ, most preferably 5 to 10 µm The ion transport pathways 1210 or cavities may optionally be filled with electrolyte.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A system (100) for manufacturing an electrode, the system (100) comprising:
a slurry reservoir (110) containing slurry (150), the slurry (150) comprising an electrode coating material and other materials, such as a binder, a solvent, an additive and/or a conductive agent, and
a die (120) configured to receive slurry (150) from the slurry reservoir (110) and apply the slurry (160) onto a substrate foil (140),
wherein the die (120) comprises deflector elements (130) configured to swirl the slurry (160) leaving the die (120).

2. The system (100) according to claim 1, wherein
the slurry (150) flows laminar from the slurry reservoir (110) to the die (120) in a flow direction, wherein the deflector elements (130) are inclined with respect to the flow direction according to one or several predefined deflection angles (300) to deflect the slurry (150) from the flow direction.

3. The system (100) according to claim 1 or 2, wherein
the deflector elements (130) configured to be adjustable by a deflection angle (300) to deflect the slurry (150) from the flow direction (200) and/or wherein the deflector elements (130) are movable.

4. The system (100) according to any one of the preceding claims, wherein
the die (120) has the shape of a slot-die and/or
the die (120) has a housing with a slit shaped opening (700) on one side configured to eject the slurry (150), and a supply port on another side configured to receive slurry (150) from the slurry reservoir (110), wherein the deflector elements (130) are arranged in the housing.

5. The system (100) according to the preceding claim, wherein
the deflector elements (130) are attached to or protrude from an inner wall of the housing of the die (120), and/or
at least one inner wall of the housing of the die (120) has a structured surface which constitutes the deflector elements (130).

6. The system (100) according to claim 4 or 5,
wherein the deflector elements (130) have a height which is smaller than a height of the housing and/or a height of the opening (700), wherein optionally a proportion of the height of the deflector elements (130) to the height of the housing and/or the height of the opening (700) is below 0.7, 0.5, or 0.1,
and/or the height of the deflector elements (130) is equal to or below 300 µm, 150 µm, or 30 µm.

7. The system (100) according to any one of the preceding claims, wherein wherein the deflector elements (130) have the shape of a plurality of plates and/or of a grid (900).

8. The system (100) according to any one of the preceding claims, wherein
wherein the deflector elements (130) are arranged in at least one row or in a matrix form being parallel to the opening (700), and/or
the deflector elements (130) are arranged in at least one spiral arrangement that extends in the direction of the opening (700).

9. The system (100) according to any one of the preceding claims, wherein
the deflector elements (130) are configured to form multiple turbulent jets or vortexes (600a, 600b, 600c, 600d, 600e) in the slurry (160) leaving the die (120).

10. The system (100) according to the preceding claim, wherein
the turbulent jets or vortexes (600a, 600b, 600c, 600d, 600e) have such dimensions that the electrode coating material remains substantially in the center of the jets and the other materials substantially around the center.

11. The system (100) according to any one of the preceding claims, wherein
the deflector elements (130) are configured such that the distribution of the electrode coating material has an uneven and/or locally concentrated distribution on the substrate foil (140).

12. The system (100) according to any one of the preceding claims, wherein the system (100) is configured such that the at least portion of the slurry (160) leaving the die (120) exhibits turbulent flow having a Reynolds number (Re) of more than 3500.

13. The system (100) according to any one of the preceding claims, further comprising:
a conveyor device (1000) for conveying a substrate foil (140) in a conveying direction (1200), wherein
the die (120) is configured to apply the slurry (160) onto the conveyed substrate foil (140).

14. A computer-implemented method of simulating a coating process to manufacture a system (100) of coating a substrate foil (140) to from an electrode, comprising:
receiving an input dataset comprising
a cavity index associated to cavities in the coating, and
a machine-learning model comprising a set of model parameters;
optimizing the model parameters by iteratively simulating the coating process to achieve the cavity index changing at least one of the following model parameters:
a shape and/or a dimension of a die (120),
a shape and/or a dimension of a deflector element (135), a number of deflector elements (130), a position of a deflector element (135),
the surface of the die (120), the surface of the deflector element (135);
and
producing an output dataset comprising optimized model parameters to manufacture a system (100) of coating a substrate foil (140) to from an electrode.

15. A method of coating a substrate foil (140) to form an electrode, the method comprising:
providing a substrate foil (140), and
ejecting a slurry (160) onto the substrate foil (140), wherein the slurry (160) is swirled during ejection.
